# EUROPEAN PATENT APPLICATION

(11) **EP 4 178 082 A1**
(43) Date of publication of application: **10.05.2023**
(21) Application number: 21206343.2
(22) Date of filing: 04.11.2021
(51) Int. Cl.: H02K 1/278, H02K 1/2791, H02K 7/18, H02K 1/27

(54) **MAGNETIC COMPONENT PART FOR A ROTOR ASSEMBLY**

(71) Applicant: Siemens Gamesa Renewable Energy A/S, 7330 Brande (DK)
(72) Inventor: Azar, Ziad, Sheffield, S10 4ED (GB); Reigner, Kevin Fabrice Franck, 7330 Brande (DK)
(74) Representative: SGRE-Association

(57) **Abstract**

It is described an electromechanical transducer (140). The electromechanical transducer (140) comprises a stator assembly (145) and a rotor assembly (150) comprising a rotor (110) shaft (125) having a longitudinal axis (110a), a mounting structure connected to the rotor (110) shaft (125), and at least one magnetic component part (204) comprising at least one permanent magnet (206), wherein a skew angle (α) between the permanent magnet (206) and the stator assembly (145) has a value of 60% to 92% of a cogging torque period, or for an integral machine, wherein the skew angle (α) between the permanent magnet (206) and the stator assembly (145) has a value of 35° to 55° electrical degrees.

## Description

### Field of invention

The present invention relates to the technical field of electromechanical transducers having a rotor which comprises permanent magnets. In particular, the present invention relates to a magnetic component part for a rotor assembly of an electromechanical transducer. Further, the present invention relates to a rotor assembly, to an electromechanical transducer and to a wind turbine, which are all equipped with at least one of such magnetic component parts. Furthermore, the present invention relates to a method for manufacturing a rotor assembly of an electromechanical transducer, wherein the rotor assembly comprises at least one of such magnetic component parts.

### Art Background

Electromechanical transducers are machines, which convert electrical energy into mechanical energy or vice versa. An electric motor is a widely used electromechanical transducer that converts electrical energy into mechanical energy using magnetic field linkage. An electric generator is an electromechanical transducer that converts mechanical energy into electrical energy also using a magnetic field linkage.

An electromechanical transducer comprises a stator and a rotor. The stator is an assembly, which represents the stationary part of an electromechanical transducer. The rotor is an assembly, which represents the moving part of an electromechanical transducer.

In order to realize a magnetic field linkage permanent magnets may be used in particular for a rotor of an electromechanical transducer. In recent years, especially since the introduction of rare-earth magnetic materials, permanent magnet (PM) electromechanical transducers have become popular since they eliminate the need for commutators and brushes, which are commonly used with conventional Direct Current (DC) electromechanical transducer. The absence of an external electrical rotor excitation eliminates losses on the rotor and makes permanent magnet electromechanical transducers more efficient. Further, the brushless design of a PM electromechanical transducer allows conductor coils to be located exclusively in the stationary stator. In this respect it is mentioned that non-PM electromechanical transducers, which are equipped with commutators and brushes, are susceptible to significantly higher maintenance costs.

PM electromechanical transducers are also known for their durability, controllability, and absence of electrical sparking. Thanks to their advantages the PM electromechanical transducers are widely used in many applications such as electric vehicles (electromechanical transducer is a motor) or in power generation systems (electromechanical transducer is a generator) such as for instance a wind turbine.

One technical problem of PM electromechanical transducers is cogging torque which is due to permeability variation between the rotor and stator, i.e. slotting. Cogging torque is an undesired effect that contributes to an output ripple (also called torque ripple), to vibrations, and to noise in an electromechanical transducer.

It is known that skewing of the rotor magnets can reduce or theoretically eliminate cogging torque in permanent magnet generators. For instance US 6,867,524 B2 discloses a permanent magnet motor comprising a rotor having at least three segments. Each of the three segments is formed sequentially adjacent and aligned along an axis of the rotor.

Each segment has at least one pair of permanent magnets disposed at a substantially equal interval in a peripheral direction of the rotor. First and second segments are skewed relative to each other by a first angular displacement, and the first and third segments are skewed relative to each other by a second angular displacement. The first and second angular displacements are selected to cause a net sum of torque ripple produced by each of the segments to be substantially equal to zero during an operation of the motor.

CN 102868246 B discloses a large-capacity low-speed permanent magnet wind power generator with a stator winding, a permanent magnet rotor and a motor core, wherein the stator winding adopts a plurality of sets of three-phase windings and a concentrated integer slot arrangement. The electrical angle between the corresponding phases in each set of three-phase windings is 60°/n, where n is the number of sets of three sets of three-phase windings, 4≥n≥2. The number of turns of each phase of the stator winding is increased to reduce the axial length of the motor core.

Rotor or Stator skewing is a technique widely used in the world of electrical machines to remove the cogging torque and torque ripple. These ripples are caused by the interaction between the permanent magnets of the rotor and the stator teeth of a permanent magnet machine, as well as back-emf distortion and saturation under load conditions.

While skewing has advantages like passive reduction of cogging torque and torque ripples, passive reduction of vibrations and passive reduction of noise there is also the drawbacks of passive reduction of torque. This leads to lower power, lower efficiency and lower annual energy production (AEP).

The reduction of torque due to skewing can only be solved by removing the skewing. As the goal in most applications is to reduce the vibrations and noise, the reduction of torque due to skewing has to be accepted as it passively reduces the torque ripples.

Therefore, there may be a need for improving skewing of an electromechanical transducer.

### Summary of the Invention

This need may be met by the subject matter according to the independent claims. Advantageous embodiments of the present invention are described by the dependent claims.

According to a first aspect of the invention there is provided an electromechanical transducer comprising a stator assembly and a rotor assembly. The electromechanical transducer comprises a stator assembly and a rotor assembly comprising a rotor shaft having a longitudinal axis, a mounting structure connected to the rotor shaft, and at least one magnetic component part comprising at least one permanent magnet, wherein a skew angle between the permanent magnet and the stator assembly has a value of 60% to 92% of a cogging torque period, or for an integral machine, wherein the skew angle between the permanent magnet and the stator assembly has a value of 35° to 55° electrical degrees.

The described electromechanical transducer is based on the idea that rather than compensating the cogging torque completely by setting the skew angle equal to the tooth pitch angle, the skew angle is optimized between zero and the tooth pitch angle to satisfy the level of noise and vibration and increase the torque at the same time.

The described electromechanical transducer may have the advantage of increasing the generator torque, the increase can be potentially in the range of 2%. The increase may vary according to different types of magnetic component parts or different types of wind turbines.

The term "cogging torque period" equals to a period of the cogging torque. Such period is 60° for integral slot machines but it could be different for fractional slot machines, i.e. according to the pole and slot combination.

It has been found that the optimized skew angle lies in a range of 35° to 55° (for an integral slot machine) or has a value of 60% to 92% of a cogging torque period or a maximum skew angle of 60 electrical degrees for an integral machine. In this range, the compensation of the cogging torque is only slightly reduced while the torque is increased. The skew angle can be defined between the permanent magnet and the lamination of the stator assembly.

The relation of the skew angle can be measured either in electrical degrees or in mechanical degrees. The measurement in electrical degrees includes a comparison of electromagnetic field lines of the stator like e.g. the tooth pitch angle and of the rotor. The mechanical angle is the electrical angle divided by the pole pair number.

The optimized skew angle can be determined relative to a tooth or a central axis of the magnetic component part. On the other hand, the optimized skew angle can be defined as a certain percentage of a maximal or full skew angle.

The orientation of a tooth of a stator assembly is defined as an angle between an edge of the tooth and the rotational axis. The edge of the tooth is preferably an edge neighboring the interspace between two teeth.

It is mentioned that the mounting structure may comprise any mechanical fastening means which allow for a mechanical connection with a support structure of the rotor assembly. Thereby, the fastening means of the mounting structure and fastening means of the support structure may be complementary with respect to each other. Specifically, the fastening means of the mounting structure and/or the fastening means of the support structure may comprise a screw, a bolt, a nut, an inside or an outside thread, a clamping element, a split pin or any other element which allows for a mechanical fastening between the mounting structure and the support structure.

It is pointed out that the mounting structure may comprise any contour which extends from the base element and/or which is formed as a recess within the base element. Specifically, the mounting structure may be a protrusion and/or a recess.

According to a further embodiment of the invention the skew angle is relative to a central axis of the magnetic component part. Such definition of the skew angle is easy to calculate and to measure.

According to a further embodiment of the invention the skew angle is between 40° to 45° or the skew angle has a value of 75% to 80% of the cogging torque period. This may provide the advantage of higher torque (e.g. plus 3% or more), same or lower torque ripple, also lower airgap force so less excitation for noise and vibration. In addition, an improvement in module rattling may be reached.

According to a further embodiment of the invention the skew angle is 45° or the skew angle has a value of 75% of the cogging torque period. This may provide the advantage that the increase of cogging torque is kept at a minimum while the torque may be 2% higher.

According to a further embodiment of the invention the skew angle is relative to the longitudinal axis of the rotor shaft. Such definition of the skew angle is easy to calculate and to measure.

According to a further embodiment of the invention the mounting structure is arranged with an angle relative to the longitudinal axis of the rotor shaft which is equal to the skew angle. This may provide the advantage that only the rotor machining angle needs to be modified.

According to a further embodiment of the invention the skew angle has a value smaller than the maximal or full skew angle and is maximized to the manufacturing tolerances and assembly imperfections and operation deformations. Such design could maximize the cogging torque and torque ripple cancelation according to the manufacturing tolerances and assembly imperfections and operation deformations.

According to an embodiment of the invention the electromechanical transducer is a generator.

According to a further aspect of the invention there is provided a wind turbine for generating electrical power. The provided wind turbine comprises tower, a rotor, which is arranged at a top portion of the tower and which comprises at least one blade, and an electromechanical transducer as described above, wherein the electromechanical transducer is mechanically or directly coupled with the rotor, i.e. direct-drive.

According to a further aspect of the invention there is provided a method for manufacturing a rotor assembly of an electromechanical transducer. The provided method comprises mounting at least one magnetic component part as described above to a mounting structure of the rotor assembly, wherein a skew angle between the permanent magnet and the stator assembly has a value of 60% to 92% of a cogging torque period, or for an integral slot machine, wherein the skew angle between the permanent magnet and the stator assembly has a value of 35° to 55° electrical degrees.

Also, the described rotor assembly manufacturing method is based on the idea that by using exclusively the magnetic component parts as described above the mechanical skew angle is optimized between zero and the tooth pitch angle to satisfy the level of noise and vibration and increase the torque at the same time.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Figure 1 shows a wind turbine according to an embodiment of the present invention.
Figure 2A shows a top view example of a known magnetic component part in a linear machine with a rotor magnet skew angle set to zero.
Figure 2B shows a top view example of a known magnetic component part in a linear machine with a rotor magnet skew angle set to maximal or full.
Figure 3 shows a top view example of a magnetic component part in a linear machine with an optimized rotor magnet skew angle according to an embodiment of the present invention, wherein the magnetic component part is mounted to a support structure of a rotor assembly as shown in Figure 1.
Figure 4 shows a diagram of torque versus a skew angle ratio of a maximal or full skew angle.
Figure 5 shows a diagram of torque change versus an absolute skew angle.
Figure 6 shows a diagram of ripple versus an absolute skew angle.

### Detailed Description

The illustration in the drawing is schematically. It is noted that in different figures, similar or identical elements are provided with the same reference signs.

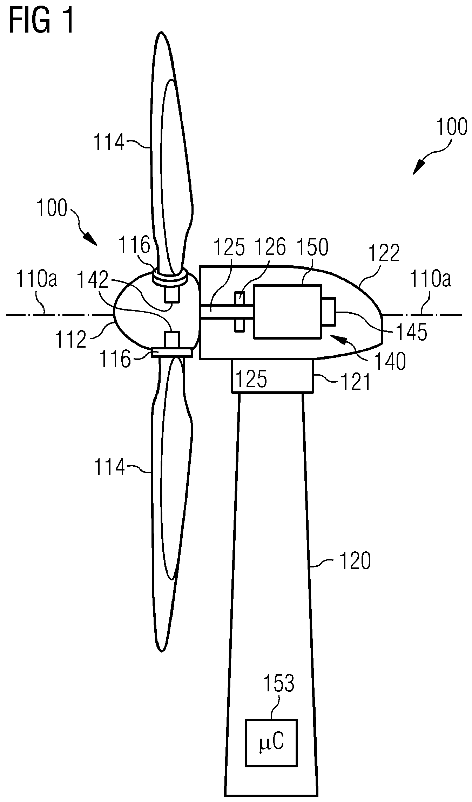

Figure 1 shows a wind turbine 100 according to an embodiment of the invention. The wind turbine 100 comprises a tower 120, which is mounted on a non-depicted fundament. On top of the tower 120 there is arranged a nacelle 122. In between the tower 120 and the nacelle 122 there is provided a yaw angle adjustment device 121, which is capable of rotating the nacelle 122 around a non depicted vertical axis, which is aligned with the longitudinal extension of the tower 120. By controlling the yaw angle adjustment device 121 in an appropriate manner it can be made sure, that during a normal operation of the wind turbine 100 the nacelle 122 is always properly aligned with the current wind direction. However, the yaw angle adjustment device 121 can also be used to adjust the yaw angle to a position, wherein the nacelle 122 is intentionally not perfectly aligned with the current wind direction.

The wind turbine 100 further comprises a rotor 110 having three blades 114. In the perspective of Figure 1 only two blades 114 are visible. The rotor 110 is rotatable around a rotational axis 110a. The blades 114, which are mounted at a hub 112, extend radially with respect to the rotational axis 110a.

In between the hub 112 and a blade 114 there is respectively provided a blade adjustment device 116 in order to adjust the blade pitch angle of each blade 114 by rotating the respective blade 114 around a non depicted axis being aligned substantially parallel with the longitudinal extension of the blade 114. By controlling the blade adjustment device 116 the blade pitch angle of the respective blade 114 can be adjusted in such a manner that at least when the wind is not so strong a maximum wind power can be retrieved from the available wind power. However, the blade pitch angle can also be intentionally adjusted to a position, in which only a reduced wind power can be captured.

As can be seen from Figure 1, the rotor 110 is directly coupled with a shaft 125, which is coupled in a known manner to an electromechanical transducer 140. The electromechanical transducer is a generator 140.

Accordingly, the turbine is a direct drive type, in which the hub is directly connected to the generator 140, i.e. no gearbox is present.

Further, a brake 126 is provided in order to stop the operation of the wind turbine 100 or to reduce the rotational speed of the rotor 110 for instance (a) in case of an emergency, (b) in case of too strong wind conditions, which might harm the wind turbine 100, and/or (c) in case of an intentional saving of the consumed fatigue life time and/or the fatigue life time consumption rate of at least one structural component of the wind turbine 100.

The wind turbine 100 further comprises a control system 153 for operating the wind turbine 100 in a highly efficient manner. Apart from controlling for instance the yaw angle adjustment device 121 the depicted control system 153 is also used for adjusting the blade pitch angle of the rotor blades 114 in an optimized manner.

In accordance with basic principles of electrical engineering the generator 140 comprises a stator assembly 145 and a rotor assembly 150. The generator 140 may include an external rotor 150 which is arranged outside the stator 145.

The stator assembly 145 comprises a plurality of coils for generating electrical current in response to a time alternating magnetic flux. The rotor assembly comprises a plurality of permanent magnets, which are arranged in rows being aligned with a longitudinal axis of the rotor assembly 150. As will be described below in detail, the permanent magnets are skewed with an optimized skew angle to satisfy the level of noise and vibration and increase the torque at the same time when the generator 140 is in operation.

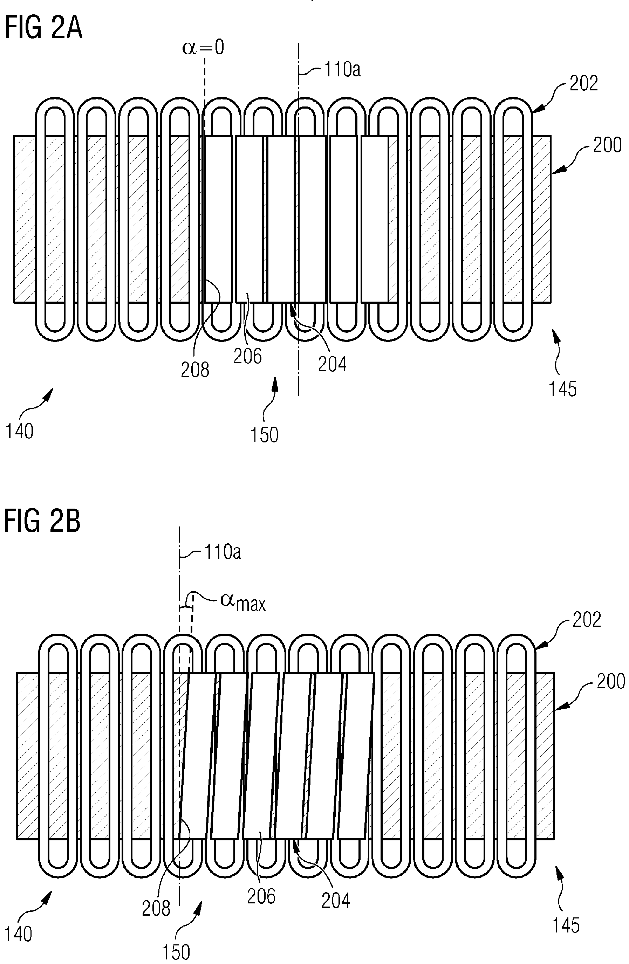

Figure 2A shows in a top view a known electromechanical transducer or generator 140, here, by example as a linear machine. The generator 140 includes the stator assembly 145 and the rotor assembly 150.

The stator assembly 145 includes at least on stator iron 200 and stator windings or stator coils 202 arranged between teeth of the stator iron 200. The rotor assembly 150 includes a magnetic component part 204 with at least one permanent magnet 206.

The magnetic component part 204 and the permanent magnets 206, respectively are arranged with a skew angle α set to zero, i.e. machine with no skew. The skew angle α can be defined as an angle between an edge 208 of the permanent magnets 206 and the rotational axis 110a or the axial axis of the stator. The edge 208 is an edge of the permanent magnet 206 which runs parallel or almost parallel to the rotational axis 110a. At least, the edge 208 has a smaller angle towards the rotational axis 110a then a neighboring edge of the respective same permanent magnet 206.

In the example shown on Figure 2A, the skew angle is zero. Thus, the generator 140 or the rotor magnets 206 are unskewed. In other words, the permanent magnets 206 are aligned with the rotational axis 110a.

Figure 2B shows in a top view a further known electromechanical transducer or generator 140, here, by example as a linear machine. The generator 140 includes the stator assembly 145 and the rotor assembly 150.

The generator 140 shown in Figure 2B is similar to the generator 140 shown in Figure 2A. However, the skew angle α is different.

According to the example shown in Figure 2B full skewing is implemented. Thus, the skew angle αₘₐₓ of the rotor magnet 206 is set to be equal to a tooth pitch angle of the stator assembly 145 (or equal to cogging torque period). This skew angle αₘₐₓ is named as a maximal or full skew angle as it allows the best or full cancellation of cogging torque or torque ripples.

Accordingly, the edge 208 of the magnetic component part 204 and the permanent magnets 206, respectively is arranged with the maximal skew angle αₘₐₓ relative to the rotational axis 110a. The skew angle αₘₐₓ of the rotor magnet 206 may for example be 60°.

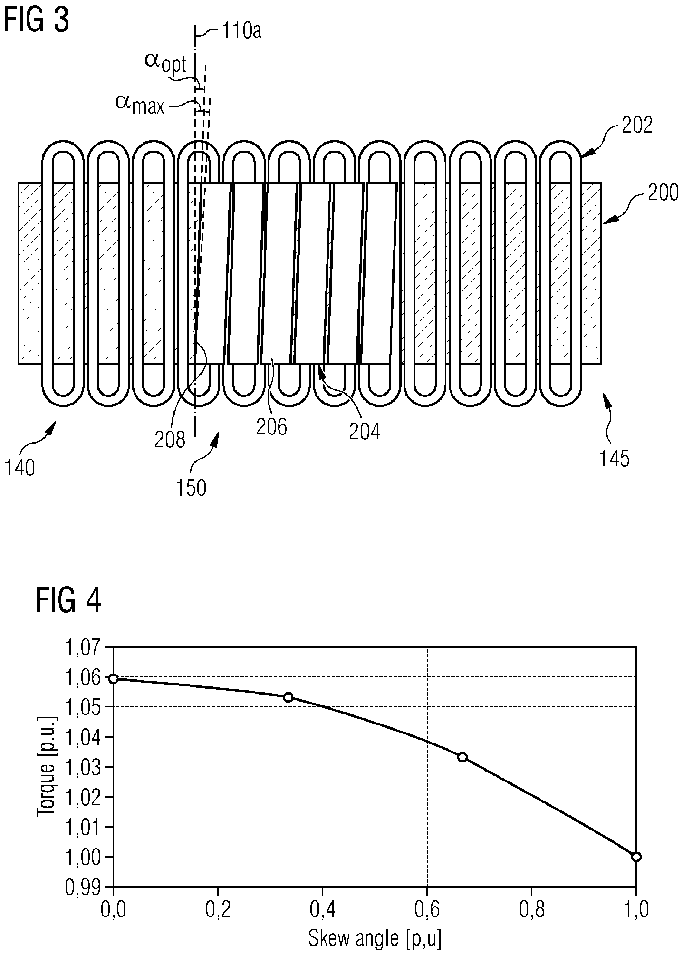

Figure 3 shows in a top view an electromechanical transducer or generator 140 according to an embodiment of the invention. Here, the generator 140 is exemplary depicted as a linear machine. The generator 140 includes the stator assembly 145 and the rotor assembly 150.

In contrast to the examples shown in Figures 2A and 2B, the embodiment of Figure 3 employs an optimized skew angle αₒₚₜ which lies between the skew angle α of zero as shown in Figure 2A and the maximum skew angle αₘₐₓ as shown in Figure 2B. The optimized skew angle αₒₚₜ does not include the skew angle α of zero and the maximum skew angle αₘₐₓ. Thus, the optimized skew angle αₒₚₜ lies in an interval between the two skew angles or limits which do not belong to the interval. In other words, the skew angle αₒₚₜ of the rotor magnet 206 is set to be smaller than the maximum skew angle αₘₐₓ and larger than the skew angle α of zero.

This optimized skew angle αₒₚₜ is named as an optimized skew angle as it allows to satisfy the level of noise and vibration and to increase the torque at the same time.

In addition, the optimal skew angle can also be defined as being smaller than manufacturing tolerances. This could also lead to good cogging torque cancellation as tolerances and imperfections are accounted for.

According to the embodiment of the invention, the edge 208 of the magnetic component part 204 and the permanent magnets 206, respectively is arranged with the optimized skew angle αₒₚₜ relative to the rotational axis 110a. Below, preferred ranges of the optimized skew angle αₒₚₜ are given.

For integral slot machine, the optimized skew angle αₒₚₜ of the rotor magnet 206 may for example be 35° to 55°, preferably 40° to 45° and most preferably 45° electrical degrees.

According to another definition, the optimized skew angle αₒₚₜ of the rotor magnet 206 may have a value of 60% to 92%, preferably of 75% to 80% and most preferably of 75% of a maximum skew angle αₘₐₓ of for example 60° electrical for integral slot machines, or is the electrical period of cogging torque of an integral slot machine.

Figure 4 shows a diagram of torque versus a skew angle ratio of a maximum skew angle.

The torque per unit is depicted as a function of the skew angle per unit. A skew angle of 1 equals to the full or maximum skew angle αₘₐₓ.

According to the described technology, the skew angle is reduced below the maximum skew angle αₘₐₓ. It can be seen that the reduction of the skew angle can increase the torque by about 1% to about 5%.

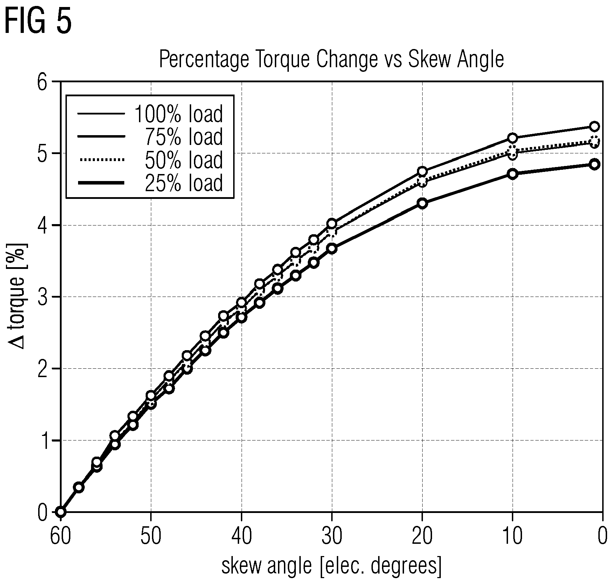

Figure 5 shows a diagram of torque change versus an absolute skew angle.

The torque in percent is depicted as a function of the absolute skew angle in electrical degrees. A skew angle of 60° equals to the full or maximum skew angle αₘₐₓ.

According to the described technology, the skew angle is reduced below the maximum skew angle αₘₐₓ. It can be seen that the reduction of the skew angle can increase the torque by about 1% to about 5%. The increase is valid for all load situations. For a skew angle of about 40° to 59° degrees the torque increase is almost the same for all load situations.

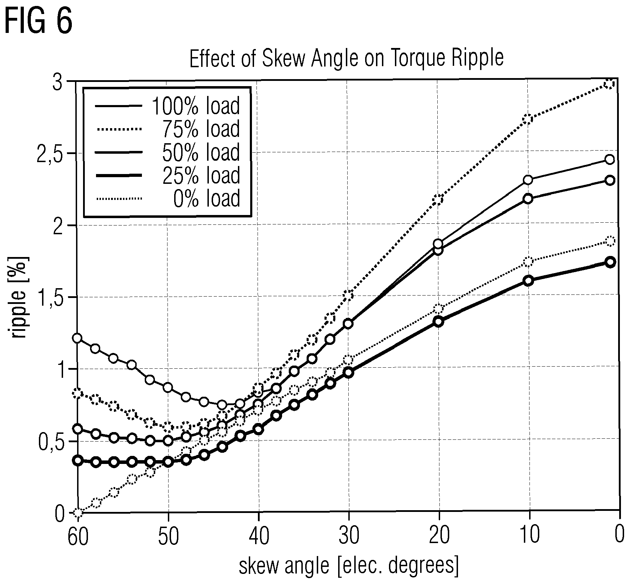

Figure 6 shows a diagram of ripple versus an absolute skew angle.

The ripple in percent is depicted as a function of the absolute skew angle in electrical degrees. A skew angle of 60° equals to the full or maximum skew angle αₘₐₓ.

According to the described technology, the skew angle is reduced below the maximum skew angle αₘₐₓ. It has been found that decreasing or reducing the skew angle is not increasing ripple for all load situations. Further, for certain values or ranges of a decreased or optimized skew angle ripple is not increasing or is even decreasing.

For an optimized skew angle αₒₚₜ of the rotor magnet 206 from 59° to about 40° ripple is decreasing for 100% load. For an optimized skew angle αₒₚₜ of the rotor magnet 206 from 59° to about 50° ripple is decreasing for 75% load. For loads of 50% and 25% ripple is not increasing for an optimized skew angle αₒₚₜ of the rotor magnet 206 from 59° to about 50°.

According to the described technology, the findings of the diagrams as shown in Figure 6 and in Figures 4 and/or 5 are taken together to achieve an optimized skew angle αₒₚₜ of 35° to 50°, preferably of 40° to 45° and most preferably of 45°.

This has the advantage that the torque can be increased by about 1% to about 5% while cogging torque and torque ripples are almost kept the same or can even be decreased.

It should be noted that the term "comprising" does not exclude other elements or steps and "a" or "an" does not exclude a plurality. Also, elements described in association with different embodiments may be combined. It should also be noted that reference signs in the claims should not be construed as limiting the scope of the claims.

## Claims

1. An electromechanical transducer (140) comprising
a stator assembly (145) and
a rotor assembly (150) comprising
a rotor shaft (125) having a longitudinal axis (110a),
a mounting structure connected to the rotor shaft (125), and
at least one magnetic component part (204) comprising at least one permanent magnet (206),
wherein a skew angle (α) between the permanent magnet (206) and the stator assembly (145) has a value of 60% to 92% of a cogging torque period, or
for an integral slot machine, wherein the skew angle (α) between the permanent magnet (206) and the stator assembly (145) has a value of 35° to 55° electrical degrees.

2. The electromechanical transducer (140) as set forth in the preceding claim, wherein
the skew angle (α) is relative to a central axis (110a) of the magnetic component part (204).

3. The electromechanical transducer (140) as set forth in any one of the preceding claims, wherein
the skew angle (α) is between 40° to 45° or
the skew angle (α) has a value of 75% to 80% of the cogging torque period.

4. The electromechanical transducer (140) as set forth in any one of the preceding claims, wherein
the skew angle (α) is 45° or
the skew angle (α) has a value of 75% of the cogging torque period.

5. The electromechanical transducer (140) as set forth in the preceding claim, wherein
the skew angle (α) is relative to the longitudinal axis (110a) of the rotor shaft (125).

6. The electromechanical transducer (140) as set forth in the preceding claims, wherein
the mounting structure is arranged with an angle (α) relative to the longitudinal axis (110a) of the rotor (110) shaft (125) which is equal to the skew angle (α).

7. The electromechanical transducer (140) as set forth in the preceding claim, wherein
the skew angle (α) has a value smaller than the maximal or full skew angle and is maximized to the manufacturing tolerances and assembly imperfections and operation deformations.

8. The electromechanical transducer (140) as set forth in the preceding claim, wherein
the electromechanical transducer (140) is a generator (140).

9. A wind turbine (100) for generating electrical power, the wind turbine (100) comprising
a tower (120),
a rotor (110), which is arranged at a top portion of the tower (120) and which comprises at least one blade (114), and
an electromechanical transducer (140) as set forth in the preceding claims 1 to 8, wherein the electromechanical transducer (140) is mechanically or directly coupled with the rotor (110).

10. A method for manufacturing a rotor assembly (150) of an electromechanical transducer (140), the method comprising
mounting at least one magnetic component part (204) having at least one permanent magnet (206) to a mounting structure of the rotor assembly (150),
wherein a skew angle (α) between the permanent magnet (206) and the stator assembly (145) has a value of 60% to 92% of a cogging torque period, or
for an integral machine, wherein the skew angle (α) between the permanent magnet (206) and the stator assembly (145) has a value of 35° to 55° electrical degrees.

11. The method as set forth in the preceding claim, wherein the skew angle (α) is relative to a central axis (110a) of the magnetic component part (204).
